# EUROPEAN PATENT SPECIFICATION

(11) **EP 1 484 989 B1**
(45) Date of publication and mention of the grant of the patent: **06.10.2010**
(21) Application number: 02789744.6
(22) Date of filing: 20.11.2002
(51) Int. Cl.: A23L 2/02, A23L 2/52, A23L 2/60, A23L 2/66, A23L 2/68

(54) **JUICE BASED BEVERAGE COMPOSITIONS**
GETRÄNK AUS BASIS VON FRUCHTSAFT
PREPARATIONS DE BOISSONS A BASE DE JUS

(30) Priority: 20.11.2001 US 335867 P; 04.03.2002 US 91149
(43) Date of publication of application: 15.12.2004
(73) Proprietor: Nestec S.A., 1800 Vevey (CH)
(72) Inventor: YANG, Baokang, Grand Rapids, MI 49546 (US)
(74) Representative: Lock, Graham James
(86) International application number: PCT/US2002/037058
(87) International publication number: WO 2003/043446

(56) References cited:
- WO-A-00/70972
- WO-A-99/56563
- GB-A- 2 335 134
- US-A- 5 641 531
- US-A- 6 106 874

## Description

### Background of the Invention

### Field of the Invention

This invention relates generally to juice based beverage compositions and particularly to palatable juice based beverage compositions containing proteins, carbohydrates, vitamins, and minerals.

### Description of Related Art

The development of fruit juice based beverages containing proteins, carbohydrates, vitamins, and minerals is very difficult. The interaction of the ingredients, particularly the protein with the minerals and other ingredients, often cause the protein to precipitate and frequently cause the entire composition to become very viscous or to gel. Similarly, these interactions may change the physical or chemical properties of the composition in a way that adversely affects the taste, color, odor, mouth-feel and other physical properties of the composition. These adverse changes may occur at any time but are particularly likely when the composition is heated during processing or when the composition sits on the shelf for extended periods.

Methods for overcoming the problems caused by interactions between proteins, carbohydrates, vitamins, and minerals in food compositions are known in the art. Most involve the use of additives or stabilizers to disrupt the interactions between the ingredients and keep the protein and other ingredients in solution during processing and storage. For example, U.S. Patent No. 5,607,714 discloses methods for stabilizing proteins in acidic pH environments by promoting a chemical reaction between proteins and galactomannan. U.S. Patent No. 3,692,532 discloses using carboxymethyl cellulose to avoid precipitation of protein in a milk-fruit juice beverage. U.S. Patent No. 3,647,476 discloses using navel orange juice debittered with vegetable oil to produce a milk-orange juice beverage. U.S. Patent No. 3,692,532 discloses pear and milk compositions that rely on pear pulp to prevent precipitation and settling. U.S. Patent No. 6,106,874 discloses a clear, low viscosity, nutritional beverage comprising water, depectinized fruit juice, a source of calcium, and whey protein isolates that relies on the use of specially processed fruit juices to avoid these common problems. Further, the prior art has failed to solve the problems of browning, physical instability, and sediment formation associated with the typical vitamin and mineral fortified juice-based beverage.

None of these prior art references, however, disclose methods for producing fruit juice based beverage compositions containing proteins, carbohydrates, vitamins, and minerals without the use of additives, stabilizers, or specially processed ingredients. There is a need, therefore, for palatable fortified fruit juice based beverage compositions that can be produced simply and efficiently without the use of specially processed ingredients, stabilizers, or other additives. Document GB 2335134 discloses a beverage comprising fruit juice carbohydrate and soluble whey protein hydrolisate having excellent physical and organoleptic properties.

### Summary of the Invention

It is, therefore, an object of the invention to provide juice based beverage compositions containing proteins, carbohydrates, vitamins, and minerals.

It is a further object of the invention to provide palatable juice based beverage compositions containing proteins, carbohydrates, vitamins, and minerals that are stable during processing and have an extended shelf-life.

It is another object of the invention to provide palatable juice based beverage compositions containing proteins, carbohydrates, vitamins, and minerals that are free from specially processed ingredients, stabilizers, or other additives.

These and other objects are achieved by carefully selecting of the ingredients to be used in juice based beverage compositions and controlling the amounts of the ingredients in the composition. By carefully selecting the ingredients and their amounts, the clarity, viscosity, pH, color, texture, taste, aftertaste, mouth-feel, stability, and other physical properties of the composition can be controlled to produce a palatable composition with an extended shelf-life.

The invention is directed to a fruit-juice based beverage composition as disclosed in present claim 1.

In one embodiment, the composition comprises from 2 to 8 wt% of a protein selected from the group consisting of whey protein isolate and a combination of whey protein isolate and whey protein hydrolysate; from 1 to 30 wt% of a carbohydrate selected from the group consisting of sucrose, fructose, high fructose corn syrup ("HFCS"), combinations of sucrose, fructose, HFCS 42, and HFCS 55, and combinations of maltodextrin with another carbohydrate selected from the group consisting of sucrose, fructose, HFCS 42, and HFCS 55; from 0.01 to 3 wt% of an edible acid selected from the group consisting of citric acid, phosphoric acid, combinations of citric acid and phosphoric acid, and combinations of malic acid with another edible acid selected from the group consisting of citric acid and phosphoric acid; and from 10 to 40 wt% of a fruit juice and combinations of fruit juices. In addition, the composition may comprise from about one-tenth to about two times the recommended daily allowance of one or more vitamins; from about one-tenth to about three times the recommended daily allowance of one or more minerals; and water. The composition containing the above ingredients is clear, has a pH of about 4.0 or less, and has a viscosity of less than about 40 centipoises, preferably less than about 20 centipoises, at room temperature. The composition may additionally contain fibers and various flavors.

Other and further objects, features and advantages of the present invention will be readily apparent to those skilled in the art.

### Detailed Description of the Invention

### Definitions

The term "weight percentages" and the acronym "wt%" as used herein refer to weight percentages based on the total weight of the juice based beverage composition in its final form with all ingredients added, including the water.

The term "weight percentage" and the acronym "wt%" when applied herein to a fruit juice refer to the weight percentage, based on the total weight of the beverage composition, of the reconstituted fruit juice and include the water that is added to a fruit juice concentrate to restore the juice to its natural state.

The term "fruit juice" as used herein, unless indicated otherwise, refers to a single fruit juice or to a combination of fruit juices.

The term "fiber" as used herein, unless indicated otherwise, refers to a single fiber or mixtures of fibers.

The term "dextrose equivalent" and the acronym "DE" as used herein refer to the percent of reducing sugars on a dry basis calculated as dextrose. Glucose (or corn) syrups are formed by reacting a starch with an acid and/or enzyme. DE is a measurement of the degree of hydrolysis that starches undergo to yield different DE syrups. Standard corn syrups are defined as having about a DE value of approximately 42. Syrup processed to have a "high" DE using has a value of approximately 65 DE. The higher the level of DE in a carbohydrate component, the sweeter the ingredient. With the sweetness factor, the high DE carbohydrates may also contribute to negative product characteristics, such as greater tendency to crystallize (could lead to a product defect if there's too much or too big of a crystal formulation); less viscosity (could lead to a product that is too sticky, inability to hold form); tendency to brown (could lead to flavor problems and coloration problems); tendency to be more hygroscopic (could lead to product that has too much crystallization); and the like as known in the art.

The term "maltodextrin" as used herein refers to an aqueous solution of nutritive saccharides obtained from edible starches and having a dextrose equivalent of less than 20. Maltodextrin can be made from any suitable edible starch, e.g., starch from corn, rice, wheat, beets, potatoes, and sorghum.

### The Invention

The present invention is a palatable juice based beverage composition containing proteins, carbohydrates, vitamins, and minerals. The composition comprises from 2 to about 8 wt% of a protein selected from the group consisting of whey protein isolate and a combination of whey protein isolate and whey protein hydrolysate; from 1 to 30 wt% of a carbohydrate selected from the group consisting of sucrose, fructose, HFCS 42, HFCS 55, combinations of sucrose, fructose, HFCS 42, and HFCS 55, and combinations of maltodextrin with another carbohydrate selected from the group consisting of sucrose, fructose, HFCS 42, and HFCS 55; from 0.01 to 3 wt% of an edible acid selected from the group consisting of citric acid, phosphoric acid, combinations of citric acid and phosphoric acid, and combinations of malic acid with another edible acid selected from the group consisting of citric acid and phosphoric acid; from 5 to 40 wt% of a fruit juice and combinations of fruit juices; from about one-tenth to about two times the recommended daily allowance of one or more vitamins; from about one-tenth to about three times the recommended daily allowance of one or more minerals; and water. The composition containing the above ingredients is clear, has a pH of about 4.0 or less, and has a viscosity of less than about 40 centipoises, preferably of less than about 20 centipoises, at room temperature and no viscosity increase during storage. By carefully selecting the above ingredients in the amounts given, a fortified palatable juice based beverage composition can be produced without the use of stabilizers additives, or special ingredients. The present invention may also optionally comprise the above composition without the vitamins and minerals and the water may be supplied as part of other ingredients of the beverage instead of as a stand-alone additive.

The whey protein isolates and whey protein hydrolysates useful in the invention can be obtained commercially from many sources well known in the art. Whey proteins are pure high quality proteins found in cow's milk. In the United States whey proteins are most often produced in conjunction with the cheese making process. During this process approximately half of the milk solids go into the cheese (curds) and the other half remain with the liquid whey. Whey proteins as a component of a healthy diet provide a number of important health benefits. Whey proteins are known to enhance the body's immune system by raising the antioxidant (glutathione) levels and reducing the risk of infections by improving the immune system's ability to respond to infectious agents. Whey proteins are also known to have a potential positive effect in other areas such as appetite suppression, cholesterol reduction, and the inhibition of dental plaque and dental caries.

The protein comprises from 2 to 8 wt%.

When a combination of whey protein isolate and whey protein hydrolysate is used in the composition, the whey protein hydrolysate comprises from 0.01 to 20 wt% of the combination. Exceeding this 20 wt% limit is undesirable because excess hydrolysate in the combination will increase the interaction between the protein and the minerals and cause precipitation that reduces the clarity of the composition. These undesirable effects will have a negative impact on sensory properties, i.e., poorer flavor and color with a tendency to brown.

The carbohydrates useful in the invention can be obtained commercially from many sources well known in the art. Sucrose, fructose, high fructose corn syrup (HFCS), and maltodextrin are well known commercially available carbohydrates commonly used in foods and beverages. Corn syrups are classified according to their dextrose equivalents (DE) and Baume. DE is a rough measure of sweetness and Baume is a measure of thickness or solids. HFCS 42 or HFCS 55 denotes a high fructose corn syrup having 42% or 55% of fructose as dry base. The carbohydrate comprises from 1 to 30 wt% of the composition, preferably from about 5 to about 25 wt%, most preferably from about 8 to about 20 wt%.

When a combination of maltodextrin with sucrose, fructose, HFCS 42, or HFCS 55 is used in the composition, the maltodextrin comprises from about 0.1 to about 25 wt% of the combination. Exceeding this 25 wt% limit is undesirable because excess maltodextrin in the combination will increase the viscosity of the composition, particularly during shipping and storage, and produce an unpalatable beverage that has an unacceptable mouth-feel when consumed.

The edible acids useful in the invention can be obtained commercially from many sources well known in the art. Citric acid, phosphoric acid, and malic acid are well known commercially available compounds commonly used in foods and beverages.

The edible acid comprises from 0.01 to 3 wt% of the composition, preferably from about 0.5 to about 2 wt%.

When a combination of malic acid or citric acid with phosphoric acid is used in the composition, the malic acid comprises from about 0.1 to about 50 wt% of the combination. Exceeding this 50 wt% limit is undesirable because excess malic in the combination will cause tartness and astringency of taste and produce an unpalatable beverage that has an unacceptable mouth-feel when consumed.

Fruit juices useful in the invention can be any fruit juice suitable for use in a beverage including citrus juices and non-citrus juices. Numerous fruit juices are available commercially from many sources well known in the art. Preferably, the fruit juices used in the present invention are citrus and non-citrus juices obtained from oranges, lemons, limes, grapefruits, tangerines, raspberries, cranberries, blueberries, boysenberries, apples, grapes, pears, cherries, pineapples, peaches, apricots, plums, mangos, passion fruit, and bananas. The juices can be used alone or in any combinations thereof and used without any special processing. Depectinized fruit juice can also be used in the invention. A depectinized fruit juice is one that has had most of the pectins removed using processes such as enzymatic digestion, chromatography, precipitation, or any other similar technique. The term "depectinized juice" has a well-known meaning to those skilled in the art and typically indicates a juice with a pectin content greater than about 0.05 wt% and less than about 0.25 wt%.

The vitamins and minerals useful in the invention are any vitamins and minerals known to have a health benefit to consumers and be compatible with the composition. Preferably, the vitamins are selected from the group consisting of vitamin A, vitamin B₁, vitamin B₂, vitamin B₆, vitamin B₁₂, vitamin C, vitamin D, vitamin E, pantothenic acid, biotin, folic acid, niacin, and other water soluble vitamins. Preferably, the minerals used in the invention are selected from the group consisting of calcium, potassium, magnesium, iron, sodium, iodine, molybdenum, chromium, selenium, zinc, and copper.

The vitamins and minerals may be present in the composition in amounts that have a health benefit to consumers. Preferably, the vitamins and minerals are present in the composition in amounts sufficient to supply from about one-tenth to about two times the recommended daily allowance for the vitamins and minerals. Such recommended daily allowances for vitamins and minerals are known in the art. Vitamins and minerals useful in the present invention can be obtained commercially from many sources well known in the art.

A particular composition comprises about 3.3 wt% of whey protein isolate; about 9.2 wt% of a mixture of about one-third sucrose and about two-thirds fructose; about 0.86 wt% of an edible acid comprising a mixture of about 25% malic acid and about 75% phosphoric acid; about 30 wt% of a fruit juice or combinations of fruit juices; the vitamins in amounts shown in Table 10; the minerals in amounts shown in Table 10; and water. Details of a version of this embodiment and of a process for making it are given in Example 7. Another version, for a different combination of fruit juices, is given in Example 8.

In another aspect, the juice based beverage compositions further comprises from about 0.01 to about 5 wt% of a fiber selected from the group consisting of polydextrose, inulin, and arabinogalactan or from about 0.01 to about 0.1 wt% of a fiber selected from the group consisting of pectin, cellulose gum, xanthan gum, gum arabic. The fiber may be selected from the group consisting of polydextrose, inulin and arabinogalactan in amounts of from about 0.5 to about 4 wt%. The fibers useful in the invention can be obtained commercially from many sources well known in the art. Pectin, cellulose gum, xanthan gum, gum arabic, polydextrose, inulin, and arabinogalactan are well known commercially available compounds commonly used in foods and beverages. In one embodiment of this invention, the total amount of fibers from both fiber groups comprises from about 0.5 to about 2 wt% of the composition.

The compositions of the present are made using well known conventional techniques. Typically, the composition is made by forming a protein slurry; forming a solution containing the carbohydrates and edible acids; mixing the protein slurry and acid solution; adding fruit juice to the mixture; adding vitamins and minerals to the mixture; adjusting the brix, pH, and temperature of the mixture; and pasteurizing the mixture. Other similar processes are known in the art. A preferred process for producing a juice based beverage composition according to the present invention comprises the steps of mixing a protein selected from the group consisting of whey protein isolate and a combination of whey protein isolate and whey protein hydrolysate in amounts sufficient to form from about 0.5 to about 10 wt% of the final composition with water to form a protein slurry; dissolving a carbohydrate selected from the group consisting of sucrose, fructose, HFCS 42, HFCS 55, combinations of sucrose, fructose, HFCS 42, and HFCS 55, and combinations of maltodextrin with another carbohydrate selected from the group consisting of sucrose, fructose HFCS 42, and HFCS 55 in water in amounts sufficient to form from about 1 to about 30 wt% of the final composition; mixing the protein slurry and carbohydrate solution; adding an edible acid selected from the group consisting of citric acid, phosphoric acid, combinations of citric acid and phosphoric acid, and combinations of malic acid with another edible acid selected from the group consisting of citric acid and phosphoric acid, wherein the malic acid comprises from about 0.1 to about 50 wt% of the combination, in amounts sufficient to form from about 0.01 to about 3 wt% of the final composition to the mixture of protein slurry and carbohydrate solution; adding one or more fruit juices in amounts sufficient to form from about 5 to about 40 wt% of the final composition to the mixture of protein slurry and carbohydrate solution; forming a solution containing one or more minerals in amounts sufficient to supply from about one-tenth to about three times the recommended daily allowance of the minerals; adding the mineral solution to the mixture of protein slurry and carbohydrate solution; forming a solution containing one or more vitamins and optional flavors in amounts sufficient to supply from about one-tenth to about two times the recommended daily allowance of the vitamins; adding the vitamin solution with optional flavors to the mixture of protein slurry and carbohydrate solution; adjusting the brix of the resulting mixture to from about 15 to about 20% with water; adjusting the pH of the resulting mixture to less that about 4.0; adjusting the temperature of the resulting mixture to from about 40°F to about 60°F (10°C to 15°C); transferring the resulting mixture to sealable containers; sealing the containers to produce a pressurized container containing the resulting mixture; and pasteurizing the resulting mixture. The resulting solution could be pasteurized in its entirety and then filled into pressurized containers under aseptic conditions or pasteurized in heat exchanger and hot filled into a can.

The juice based beverage compositions of the present invention are useful as a palatable food for consumers.

The invention having been generally described, the following examples are given as particular embodiments of the invention and to demonstrate the practice and advantages thereof. It is understood that the examples are given by way of illustration and are not intended to limit the specification or the claims to follow in any manner.

### Example 1

254 grams of antifoam agent C emulsion was dissolved in 2700 liters of filtered water in a processing tank. The resulting 2700 liters of water was continuously pumped into a liquifier to dissolve a whey protein isolate (528kgs). The protein and water slurry was kept in the liquifier for about 30 seconds to ensure the protein was well dissolved and had no lumps. The dissolved protein solution was transferred directly to a finished product tank.

The following ingredients were added to 5400 liters of room temperature filtered water in the liquifier. The following ingredients were added to the liquifier in the amounts shown: fructose (966kgs), sucrose (498kgs), potassium chloride (13.2kgs), magnesium chloride (5.12kgs), potassium citrate (11.33kgs), beta-carotene (2.20kgs), clouding agent (23.10kgs), and malic acid (26.63kgs). The resulting mixture was transferred directly into the finished product tank containing the protein solution.

778.30 kgs of a tropical juice concentrate blend consisting of pineapple, pear, apple, mango, plum, passion fruit, orange, and natural flavors was added directly to the finish product tank.

74.66 kgs of phosphoric acid was diluted with 200 liters filtered water in the liquifier and the following minerals were added into the diluted acid solution in the following order: dibasic calcium phosphate (18.70kgs), magnesium phosphate (10.67 kgs), calcium carbonate (11.40kgs), and trace mineral premix (1.10 kgs). After thoroughly mixing for 5-10 minutes, the mineral solution was transferred to the finished product tank.

10.82 kgs of vitamin premix and 23.8kgs natural and artificial flavor were dissolved in a small amount of water and directly added into finished product tank.

The brix of the product from the finished product tank was adjusted to about 19% with filtered water. Then, the pH was adjusted to 3.2 with 25% (w/w solid) malic acid in a phosphoric acid solution. The brix was adjusted to 17.5% with filtered water. Then, the pH was adjusted to 3.2 with an acid solution comprising 25% malic acid and 75% phosphoric acid. The temperature of the mixture was adjusted to 40-50°F (10°C to 15°C). The resulting product was a 15,000 liter batch of protein and vitamin and mineral fortified juice drink containing the ingredients shown in Table 1.

The chilled product was then transferred to a filler and the product was filled into tall slim aluminum cans containing 254 grams of the fortified juice drink having the nutritional profile per 8oz can shown in Table 7. The filled cans were flushed with nitrogen and a drop of liquid nitrogen was added to control can pressure (25 psi). The cans were sealed with a typical lid closure. A "bulb buster" was used to limit headspace oxygen to less than 3%.

The chilled product (40-50°F) (10°C to 15°C) in the pressurized cans was thermally processed in an agitating, partial water immersion retort device using a minimum rotation speed of 9 RPM and water level ranging from 55-68%. The upper vessel was maintained at about 205°F (97°C) and 10 psig upper drum pressure with 9.5 minutes come up time, pasteurized at about 183°F (85°C) and 16 psig for 2 minutes, and followed with a fast cooling phase (final product temperature less than (100°F) (39°C)to achieve the p-value of 0.1-0.7.

Finished product was incubated at 45°C for 24 hours and checked to ensure that there was no viscosity increase. The results showed that the viscosity had not increased during this time. The product was sampled and found to be a palatable juice based product containing the listed ingredients and having an acceptable clarity, viscosity, pH, taste, aftertaste, and mouth-feel.

**Table 1**

| Ingredient | Amount (kg) |
|---|---|
| Fructose, Crystalline | 966.00 |
| Tropical Juice Concentrate | 776.00 |
| Whey Protein Isolate | 528.00 |
| Sucrose | 498.00 |
| Tropical flavor | 23.80 |
| Beverage Clouding Agent | 23.10 |
| Dibasic Calcium Phosphate | 18.70 |
| Potassium Chloride | 13.20 |
| Calcium Carbonate | 11.40 |
| Potassium Citrate | 11.33 |
| Vitamin-Iodine Premix | 10.82 |
| Magnesium Phosphate | 10.67 |
| Magnesium chloride | 5.12 |
| Beta-Carotene | 2.20 |
| Trace mineral premix | 1.10 |
| Antifoam agent C | 0.39 |
| Malic acid | 26.63 |
| Phosphoric acid | 93.67 |

### Example 2

Example 1 was repeated except that a mixture of whey protein isolate (422.6kgs) and whey protein hydrolysate (105.4kgs) was used instead of just the whey protein isolate of Example 1. The resulting product was a 15,000 liter batch of protein, vitamin and mineral fortified juice based drink contained the ingredients shown in Table 2 and provided same nutrient profile as shown in Table 7.

**Table 2**

| Ingredient | Amount (kg) |
|---|---|
| Fructose, Crystalline | 966.00 |
| Tropical Juice Concentrate | 776.00 |
| Whey Protein Isolate | 422.60 |
| Whey protein hydrolysate | 105.40 |
| Sucrose | 498.00 |
| Arabinogalactan | 320.00 |
| Tropical flavor | 23.80 |
| Richmix Cloud 23 - CWS | 23.10 |
| Dibasic Calcium Phosphate | 18.70 |
| Potassium Chloride | 13.20 |
| Calcium Carbonate | 11.40 |
| Potassium Citrate | 11.33 |
| Vitamin-Iodine Premix | 10.82 |
| Magnesium Phosphate | 10.67 |
| Magnesium chloride | 5.12 |
| Beta-Carotene | 2.20 |
| Trace mineral premix | 1.10 |
| Antifoam agent C | 0.39 |
| Malic acid | 26.63 |
| Phosphoric acid | 93.67 |

### Example 3

Example 1 was repeated except that 646.8 kg of high fructose corn syrup 42 ("HFCS 42") was used instead of sucrose. The resulting product was a 15,000 liter batch of protein, vitamin and mineral fortified juice based drink contained the ingredients shown in Table 3 and provided same nutrient profile as shown in Table 7. This Example shows that the carbohydrate can be modified to HDCS without significantly altering the properties of the composition.

**Table 3**

| Ingredient | Amount (kg) |
|---|---|
| Fructose, Crystalline | 966 |
| Mix Berry Concentrate WOJC | 776 |
| Whey Protein Isolate | 528 |
| HFCS 42 | 646.8 |
| Nat. & Art. Mix Berry Flavor | 31.00 |
| Dibasic Calcium Phosphate | 18.7 |
| Potassium Chloride | 13.2 |
| Calcium Carbonate | 11.44 |
| Potassium Citrate | 11.33 |
| Vitamin Premix | 10.82 |
| Magnesium Phosphate | 10.67 |
| Magnesium Chloride | 5.12 |
| Mineral Premix | 1.11 |
| WJ Wild Cherry Shade "R" | 0.714 |
| Antifoam agent C | 0.39 |
| Malic acid | 26.63 |
| Phosphoric acid | 93.47 |

### Example 4

Example 1 was repeated except that a mixture of HFCS, sucrose, and fructose was used instead of sucrose. The resulting product was a 15,000 liter batch of protein, vitamin and mineral fortified juice based drink contained the ingredients shown in Table 4 and provided same nutrient profile as shown in Table 7. This Example shows that the carbohydrate can be modified to use a combination of these carbohydrates without significantly altering the properties of the composition.

**Table 4**

| Ingredient | Amount (kg) |
|---|---|
| Fructose, Crystalline | 711.00 |
| Tropical Juice Concentrate | 776.00 |
| Whey Protein Isolate | 528.00 |
| Sucrose | 694.00 |
| HFCS 55 | 87.40 |
| Tropical flavor | 23.80 |
| Beverage Clouding Agent | 23.10 |
| Dibasic Calcium Phosphate | 18.70 |
| Potassium Chloride | 13.20 |
| Calcium Carbonate | 11.40 |
| Potassium Citrate | 11.33 |
| Vitamin-Iodine Premix | 10.82 |
| Magnesium Phosphate | 10.67 |
| Magnesium chloride | 5.12 |
| Beta-Carotene | 2.20 |
| Trace mineral premix | 1.10 |
| Antifoam agent C | 0.39 |
| Malic acid | 26.63 |
| Phosphoric acid | 93.67 |

### Example 5

254 grams of antifoam agent C emulsion was dissolved in 2700 liters of filtered water as described in Example 1.

The following ingredients were added to 5400 liters of room temperature filtered water in a processing tank with agitation. The following ingredients were added to the liquifier in the amounts shown: fructose (966kgs), sucrose (498kgs), potassium chloride (13.2kgs), magnesium chloride (5.12kgs), potassium citrate (11.33kgs), wild cherry shade R (714 grams), and malic acid (26.63kgs). The resulting mixture was transferred directly into the finished product tank.

778.3kgs of a blend of berry juice concentrate consisting of pear, apple, red raspberry, strawberry, cranberry, blueberry, boysenberry and cherry was added directly to the finished product tank.

74.66 kgs of phosphoric acid was dissolved with 200 liters filtered water in the liquifier and following minerals were added into the diluted acid solution in the following order: dibasic calcium phosphate (18.70kgs), magnesium phosphate (10.67kgs), calcium carbonate (11.40kgs), and trace mineral premix (1.10kgs). After thoroughly mixing for 5-10 minutes, the mineral solution was transferred to the finished product tank

10.82 kgs of vitamin premix and 23.8kgs of natural flavor and artificial flavor were dissolved in a small amount of water and directly added into finished product tank.

The brix of the product from the finished product tank was adjusted to about 19% with filtered water. Then, the pH was adjusted to 3.2 with an acid solution comprising 25% malic acid and 75% phosphoric acid. The temperature of the mixture was adjusted to 40-50°F (10°C to 15°C). The resulting product was a 15,000 liters batch of protein and vitamin and mineral fortified juice drink containing the ingredients shown in Table 5.

The chilled product was filled, sealed, and thermally processed as described in Example 1 to produce a fortified drink having the nutritional profile per 8oz can shown in Table 7. Finished product was incubated at 45°C for 24 hours and checked to ensure that there was no viscosity increase. The results showed that the viscosity had not increased during this time. This Example shows that the fruit juice and some other ingredients can be modified without significantly altering the properties of the composition.

**Table 5**

| Ingredient | Amount (kg) |
|---|---|
| Fructose, Crystalline | 966 |
| Mix Berry Concentrate WOJC | 776 |
| Whey Protein Isolate | 528 |
| Sucrose | 498 |
| Nat. & Art. Mix Berry Flavor | 31.00 |
| Dibasic Calcium Phosphate | 18.7 |
| Potassium Chloride | 13.2 |
| Calcium Carbonate | 11.44 |
| Potassium Citrate | 11.33 |
| Vitamin Premix | 10.82 |
| Magnesium Phosphate | 10.67 |
| Magnesium Chloride | 5.12 |
| Mineral Premix | 1.11 |
| WJ Wild Cherry Shade "R" | 0.714 |
| Antifoam agent C | 0.39 |
| Malic acid | 26.63 |
| phosphoric acid | 93.47 |

### Example 6

254 grams of antifoam agent C emulsion was dissolved in 2700 liters of filtered water in a processing tank. The resulting 2700 liters of water was placed in a liquifier to dissolve the whey protein isolate (528kgs). The protein and water slurry was kept in the liquifier for 30 seconds to ensure the protein was well dissolved and had no lumps. The dissolved protein solution was transferred directly to a finished product tank.

The following ingredients were added to 5400 liters of room temperature filtered water in a processing tank with agitation. The ingredients were added in the following order: fructose (966kgs), sucrose (498kgs), arabinogalactan (320kgs), potassium chloride (13.2kgs), magnesium chloride (5.12kgs), potassium citrate (11.33kgs), 3% beta-carotene solution (2.2kgs), clouding agent (23.1kgs), and malic acid (26.63kgs). The resulting mixture was transferred directly into the finished product tank.

778.30 kgs of a tropical juice concentrate blend consisting of pineapple, pear, apple, mango, plum, passion fruit, orange, and natural flavors was added directly to the finished product tank.

74.66 kgs of phosphoric acid was diluted with 200 liters Filtered water in a liquifier and the following minerals were added into the diluted acid solution in the following order: dibasic calcium phosphate (18.70kgs), magnesium phosphate (10.67kgs), calcium carbonate (11.40kgs), and trace mineral premix (1.10 kgs). After thoroughly mixing for 5-10 minutes, the mineral solution was transferred to the finished product tank

10.82 kgs of vitamin premix and 23.80 kgs of natural flavor and artificial flavor were dissolved in a small amount of water and directly added into finished product tank.

The brix was adjusted to about 22% with filtered water. Then, the pH was adjusted to 3.2 with 25% (w/w solid) malic acid in a phosphoric acid solution. The brix was adjusted to 19.6% with Filtered water. Then, the pH was adjusted to 3.2 with an acid solution comprising 25% malic acid and 75% phosphoric acid.

The temperature of the mixture was adjusted to 40-50°F (10°C to 15°C). The resulting product was a 15,000 liter batch of protein and vitamin and mineral fortified juice drink containing the ingredients shown in Table 6.

The chilled product was then transferred to a filler and the product was filled into tall slim aluminum cans containing 254 grams of the fortified juice drink having the nutrients shown in Table 8. The filled cans were flushed with nitrogen and a drop of liquid nitrogen was added to control can pressure (25 psi). The cans were sealed with a typical lid closure. A "bulb buster" was used to limit headspace oxygen to less than 3%. This Example shows that a fiber can be added to the composition without significantly altering the properties of the composition.

**Table 6**

| Ingredient | Amount (kg) |
|---|---|
| Fructose, Crystalline | 966.00 |
| Tropical Juice Concentrate | 776.00 |
| Whey Protein Isolate | 528.00 |
| Sucrose | 498.00 |
| Arabinogalactan | 320.00 |
| Tropical flavor | 23.80 |
| Beverage Clouding Agent | 23.10 |
| Dibasic Calcium Phosphate | 18.70 |
| Potassium Chloride | 13.20 |
| Calcium Carbonate | 11.40 |
| Potassium Citrate | 11.33 |
| Vitamin-Iodine Premix | 10.82 |
| Magnesium Phosphate | 10.67 |
| Magnesium chloride | 5.12 |
| Beta-Carotene | 2.20 |
| Trace mineral premix | 1.10 |
| Antifoam agent C | 0.39 |
| Malic acid | 26.63 |
| Phosphoric acid | 93.67 |

**Table 7**

| Nutrient Composition | Units | Per 8 Fluid Ounce Can |
|---|---|---|
| Calories | kcal | 160.00 |
| Protein | G | 8.00 |
| Fat | G | 0.00 |
| Carbohydrate | G | 31.00 |
| Ash | G | 2.50 |
| H₂O | G | 210.00 |
| Vitamin A, IU | IU | 750.00 |
| Vitamin D, IU | IU | 40.00 |
| Vitamin E, IU | IU | 12.00 |
| Thiamin | MCG | 300.00 |
| Riboflavin | MCG | 340.00 |
| Vitamin B6 | MCG | 500.00 |
| Vitamin B12 | MCG | 1.43 |
| Niacin | MCG | 3,000.00 |
| Folic Acid | MCG | 80.00 |
| Pantothenic acid | MCG | 1,500.00 |
| Biotin | MCG | 45.00 |
| Vitamin C | MG | 60.00 |
| Calcium | MG | 150.00 |
| Phosphorus | MG | 350.00 |
| Magnesium | MG | 40.00 |
| Sodium | MG | 30.00 |
| Potassium | MG | 150.00 |
| Chloride | MG | 100.00 |
| Iron | MG | 2.20 |
| Zinc | MG | 1.05 |
| Copper | MCG | 300.00 |
| Iodine | MCG | 28.00 |
| Manganese | MCG | 200.00 |
| Selenium | MCG | 7.00 |
| Chromium | MCG | 11.00 |
| Molybdenum | MCG | 8.00 |

**Table 8**

| Nutrient Composition | Units | Per 8 Fluid Ounce Can |
|---|---|---|
| Calories | KCal | 160.00 |
| Protein | G | 8.00 |
| Fat | G | 0.00 |
| Fiber | G | 5.00 |
| Carbohydrate | G | 31.00 |
| Ash | G | 2.50 |
| H₂O | G | 210.00 |
| Vitamin A, IU | IU | 750.00 |
| Vitamin D, IU | IU | 40.00 |
| Vitamin E, IU | IU | 12.00 |
| Thiamin | MCG | 300.00 |
| Riboflavin | MCG | 340.00 |
| Vitamin B6 | MCG | 500.00 |
| Vitamin B12 | MCG | 1.43 |
| Niacin | MCG | 3,000.00 |
| Folic Acid | MCG | 80.00 |
| Pantothenic acid | MCG | 1,500.00 |
| Biotin | MCG | 45.00 |
| Vitamin C | MG | 60.00 |
| Calcium | MG | 150.00 |
| Phosphorus | MG | 350.00 |
| Magnesium | MG | 40.00 |
| Sodium | MG | 30.00 |
| Potassium | MG | 150.00 |
| Chloride | MG | 100.00 |
| Iodine | MCG | 28.00 |
| Iron | MG | 2.20 |
| Zinc | MG | 1.05 |
| Copper | MCG | 300.00 |
| Manganese | MCG | 200.00 |
| Selenium | MCG | 7.00 |
| Chromium | MCG | 11.00 |
| Molybdenum | MCG | 8.00 |

| | | |
|---|---|---|
| KCal = kilocalories; G = gram(s); IU = International Units; MCG = micrograms; MG = milligrams | | |

### Example 7

254 grams of antifoam agent C emulsion was dissolved in 1800 liters of filtered water in a processing tank, and the resulting solution was continuously pumped into a liquifier to dissolve a whey protein isolate (353.019 kgs). The protein and water slurry was kept in the liquifier for about 30 seconds to ensure the protein was well dissolved and had no lumps. The dissolved protein solution was transferred directly to a finished product tank.

The following ingredients were added to 3600 liters of room temperature filtered water in the liquifier. The following ingredients were added to the liquifier in the amounts shown: fructose (642.591 kgs), sucrose (331.526 kgs), potassium chloride (8.652 kgs), magnesium chloride (3.688 kgs), potassium citrate (7.427 kgs), beta-carotene (1.442 kgs), clouding agent (15.400 kgs), and malic acid (20.499 kgs). The resulting mixture was transferred directly into the finished product tank containing the protein solution.

515.963 kgs of a tropical juice concentrate blend consisting of: pineapple, pear, apple, mango, plum, passion fruit, orange, and natural flavors was added directly to the finish product tank.

71.951 kgs of phosphoric acid was diluted with 200 liters filtered water in the liquifier and the following minerals were added into the diluted acid solution in the following order: dibasic calcium phosphate (12.258 kgs), magnesium phosphate (7.694 kgs), calcium carbonate (7.499 kgs), and trace mineral premix (0.808 kgs). After thoroughly mixing for 5-10 minutes, the mineral solution was transferred to the finished product tank.

7.873 kgs of vitamin premix and 15.610 kgs natural and artificial flavor were dissolved in a small amount of water and directly added into finished product tank.

The brix of the product from the finished product tank was adjusted to about 19% with filtered water. Then, the pH was adjusted to 3.2 with 25% (w/w solid) malic acid in a phosphoric acid solution. The brix was adjusted to 17.5% with filtered water. Then, the pH was adjusted to 3.2 with an acid solution comprising 25% malic acid and 75% phosphoric acid. The temperature of the mixture was adjusted to 40-50°F (10°C to 15°C). The resulting product was a 10000 liter batch of protein and vitamin and mineral fortified juice drink containing the ingredients shown in Table 9.

The chilled product was then transferred to a filler and the product was filled into tall slim aluminum cans containing 254 grams of the fortified juice drink having the nutritional profile per 8oz can shown in Table 10. The filled cans were flushed with nitrogen and a drop of liquid nitrogen was added to control can pressure (25 psi). The cans were sealed with a typical lid closure. A "bulb buster" was used to limit headspace oxygen to less than 3%.

The chilled product (40-50°F) (10°C to 15°C) in the pressurized cans was thermally processed in an agitating, partial water immersion retort device using a minimum rotation speed of 9 RPM and water level ranging from 55-68%. The upper vessel was maintained at about 205°F (97°C) and 10 psig upper drum pressure with 9.5 minutes come up time, pasteurized at about 183°F (85°C) and 16 psig for 2 minutes, and followed with a fast cooling phase (final product temperature less than (100°F) (39°C)to achieve the p-value of 0.1-0.7.

Finished product was incubated at 45°C for 24 hours and checked to ensure that there was no viscosity increase. The results showed that the viscosity had not increased during this time. The product was sampled and found to be a palatable juice based product containing the listed ingredients and having an acceptable clarity, viscosity, pH, taste, aftertaste, and mouth-feel.

**Table 9**

| Ingredient | Amount (kg) | wt% excluding water | wt% in bev. w/water added |
|---|---|---|---|
| Fructose, Crystalline | 642.591 | 31.746 | 6.062 |
| Tropical blend | 515.963 | 25.490 | 4.868 |
| Whey Protein Isolate | 353.019 | 17.440 | 3.330 |
| Sucrose | 331.526 | 16.378 | 3.128 |
| Phosphoric acid | 71.951 | 3.555 | 0.679 |
| Malic acid | 20.499 | 1.013 | 0.193 |
| Mango passion - fruit flavor | 15.610 | 0.771 | 0.147 |
| Rchmix cloud 23 cws | 15.400 | 0.761 | 0.145 |
| Dibasic Calcium Phosphate | 12.258 | 0.606 | 0.116 |
| Potassium Chloride | 8.652 | 0.427 | 0.082 |
| Calcium Carbonate | 7.499 | 0.370 | 0.071 |
| Potassium Citrate | 7.427 | 0.367 | 0.070 |
| Vitamin premix | 7.873 | 0.389 | 0.074 |
| Magnesium Phosphate | 7.694 | 0.380 | 0.073 |
| Magnesium Chloride | 3.688 | 0.182 | 0.035 |
| Beta-Carotene 2% WD emulsion | 1.442 | 0.071 | 0.014 |
| Trace mineral premix | 0.808 | 0.040 | 0.008 |
| Antifoam C emulsion | 0.254 | 0.040 | 0.002 |

The total carbohydrate content of the beverage is approximately 12.5%. This amount includes the sucrose and fructose added to the protein slurry (approximately 9.19% of the total weight of the beverage) plus the carbohydrates naturally present in fruit juices. From Table 9, it can be seen that 515.96 kg of fruit juice concentrate (tropical blend) are added to the mixture, and that this amount represents approximately 25.49 wt% of the beverage ingredients, excluding water, and 4.868 wt% including the water added during processing. This amount of concentrate is produced from approximately 3,000 kg of natural fruit juice. Thus, the addition of approximately 515 kg of concentrate to the mixture is equivalent to the addition of approximately 3,000 kg of natural juice. For the 10,000 liters of beverage in the example, the fruit juice content in the beverage is thus approximately 30 wt%. As stated in the definitions section above, the term "weight percentage" when applied to a fruit juice refers to the weight percentage of the reconstituted fruit juice and it includes the water that is to be added to the juice concentrate to restore the concentrate to its natural state.

**Table 10**

| Nutrient Composition | Units | Per 8 Fluid Ounce Can |
|---|---|---|
| Calories | kcal | 160.00 |
| Protein | G | 8.00 |
| Fat | G | 0.00 |
| Carbohydrate | G | 31.00 |
| Ash | G | 2.50 |
| H₂O | G | 210.00 |
| Vitamin A, IU | IU | 750.00 |
| Vitamin D, IU | IU | 40.00 |
| Vitamin E, IU | IU | 12.00 |
| Riboflavin | MCG | 340.00 |
| Vitamin B6 | MCG | 500.00 |
| Vitamin B12 | MCG | 1.43 |
| Niacin | MCG | 3,000.00 |
| Folic Acid | MCG | 80.00 |
| Pantothenic acid | MCG | 1,500.00 |
| Biotin | MCG | 45.00 |
| Vitamin C | MG | 60.00 |
| Calcium | MG | 150.00 |
| Phosphorus | MG | 350.00 |
| Magnesium | MG | 40.00 |
| Sodium | MG | 50.00 |
| Potassium | MG | 150.00 |
| Chloride | MG | 100.00 |
| Iodine | MCG | 28.00 |
| Manganese | MCG | 200.00 |
| Selenium | MCG | 7.00 |
| Chromium | MCG | 11.00 |
| Molybdenum | MCG | 8.00 |

| | | |
|---|---|---|
| KCal = kilocalories; G = gram(s); IU = International Units; MCG = micrograms; MG = milligrams | | |

### Example 8

Example 7 was repeated except that 515.963 kgs of blend of berry juice consisting of pear, pineapple, red raspberry, strawberry, cranberry, blueberry, boysenberry and cherry was used instead of the tropical juice concentrate blend of Example 7. The resulting product was a 10000 liter batch of protein, vitamin and mineral fortified juice based drink contained the ingredients shown in Table 11 and provided same nutrient profile as shown in Table 9.

**Table 11**

| Ingredient | Amount (kg) | wt% excluding water | wt% in bev. w/water added |
|---|---|---|---|
| Fructose, Crystalline | 642.591 | 31.924 | 6.062 |
| Mixed Berry blend | 515.963 | 25.633 | 4.868 |
| Whey Protein Isolate | 353.019 | 17.538 | 3.330 |
| Sucrose | 331.526 | 16.470 | 3.128 |
| Phosphoric acid 85% | 71.951 | 3.575 | 0.679 |
| Malic acid | 20.499 | 1.018 | 0.193 |
| Berry flavor, natural & artificial | 20.673 | 1.027 | 0.195 |
| Dibasic Calcium Phosphate | 12.258 | 0.609 | 0.116 |
| Potassium Chloride | 8.652 | 0.430 | 0.082 |
| Calcium Carbonate | 7.499 | 0.373 | 0.071 |
| Potassium Citrate | 7.427 | 0.369 | 0.070 |
| Vitamin premix | 7.873 | 0.391 | 0.074 |
| Magnesium Phosphate | 7.694 | 0.382 | 0.073 |
| Magnesium Chloride | 3.688 | 0.183 | 0.035 |
| Color, wild cherry shade | 0.476 | 0.024 | 0.004 |
| Trace mineral premix | 0.808 | 0.040 | 0.008 |
| Antifoam C emulsion | 0.254 | 0.013 | 0.002 |

The total carbohydrate content of the beverage is approximately 12.5 wt%. This amount includes the sucrose and fructose added to the protein slurry (approximately 9.19 wt% of the total weight of the beverage) plus the carbohydrates naturally present in fruit juices. From Table 11, it can be seen that 515.96 kg of fruit juice concentrate (mixed berry blend) are added to the mixture, and that this amount represents approximately 25.63 wt% of the beverage ingredients, excluding water, and 4.868 wt% including the water added during processing. This amount of concentrate is produced from approximately 3,000 kg of natural fruit juice. Thus, the addition of approximately 515 kg of concentrate to the mixture is equivalent to the addition of approximately 3,000 kg of natural juice. For the 10,000 liters of beverage in the example, the fruit juice content in the beverage is thus approximately 30 wt%. As stated in the definitions section above, the term "weight percentage" when applied to a fruit juice refers to the weight percentage of the reconstituted fruit juice and it includes the water that is to be added to the juice concentrate to restore the juice concentrate to its natural state.

### Example 9

Example 1 was repeated except that different types of edible acid were used. The acids and resultsare shown in Table 12. Referring to Table 12, the X shows which acid or combination of acids were used. The results show that different acids and combinations of acid can be used without significantly altering the properties of the composition. There was an indication, however, that large amounts of malic acid increased the viscosity of the composition to undesirable levels.

**Table 12**

| Combination of Acids | Citric Acid | Malic Acid | Phosphoric Acid |
|---|---|---|---|
| 1 | X | | |
| 2 | | X | |
| 3 | | | X |
| 4 | X | | X |
| 5 | | X | X |
| 6 | X | X | |
| 7 | X | X | X |

### Example 10

Example 1 was repeated except that malic acid combinations and carbohydrate levels were tested to determine their effect on the composition. The test combinations and results are shown in Table 13. Referring to Table 13, the results show that malic acid levels in combinations should be limited to a maximum of about 50% of the total edible acid.

**Table 13**

| Order of Tests | Flavor Level % | Malic Acid Content (%) | CHO Content (g/8oz) | Viscosity after Incubated at 45°C for 24 hours |
|---|---|---|---|---|
| 1 | 0.25 | 25 | 34 | 26 |
| 2 | 0.4 | 0.0 | 34 | 20 |
| 3 | 0.1 | 25 | 25 | 89 |
| 4 | 0.4 | 25 | 25 | 94 |
| 5 | 0.25 | 0 | 25 | 70 |
| 6 | 0.25 | 25 | 34 | 71 |
| 7 | 0.1 | 25 | 42 | 68 |
| 8 | 0.25 | 25 | 34 | 96 |
| 9 | 0.4 | 25 | 42 | 50 |
| 10 | 0.25 | 0 | 42 | 415 |
| 11 | 0.4 | 50 | 34 | 158 |
| 12 | 0.1 | 50 | 34 | 425 |
| 13 | 0.25 | 50 | 25 | 174 |
| 14 | 0.1 | 0 | 34 | 148 |
| 15 | 0.25 | 50 | 42 | 100 |

### Example 11

Example 1 was repeated except that carbohydrate combinations were tested to determine their effect on the composition. The test combinations and results are shown in Table 14. Referring to Table 14, the results show that the tested carbohydrates can be used. However, some data indicated that there was a need to limit maltodextrin such that it was not used alone and was limited to about 30% in combinations.

**Table 14**

| Potential Combination | Maltodextrin 15 DE | Sucrose | HFCS 42 or 55 | Fructose |
|---|---|---|---|---|
| 1 | X | X | X | X |
| 2 | | X | X | X |
| 3 | | | X | X |
| 4 | | X | | X |
| 5 | X | | | X |
| 6 | | | | X |
| 7 | X | X | X | |
| 8 | | X | X | |
| 9 | | | X | |
| 10 | | X | | |
| 11 | X | X | | |

### Example 12

Example 1 was repeated except that the effect of protein hydrosylate on viscosity was evaluated. The test combinations and results are shown in Table 15. Referring to Table 15, the results indicate that the amount of whey protein hydrolysate should be limited to about 20 wt% of the combination.

**Table 15**

| Amount of whey protein hydrolysate (percent) | Amount of whey protein (percent) | Viscosity after incubated at 45°C for 24 hours (cps) |
|---|---|---|
| 5 | 95 | 18.8 |
| 10 | 90 | 36.2 |
| 20 | 80 | 8.7 |
| 40 | 60 | 8.7 |
| 60 | 40 | 9.2 |

### Example 13

Example 1 was repeated except that the effect of pH and protein content were evaluated. The test combinations and results are shown in Table 16. Referring to Table 16, the results indicate that the pH can be about 4.0 or less when protein is used in amounts according to the invention.

**Table 16**

| Order of experiments | Protein content (grams/8oz) | pH | Viscosity (cps) | |
|---|---|---|---|---|
| | | | 24 hour at 45°C | 48 hours at 45°C |
| 1 | 4 | 3.2 | 4.0 | 4.3 |
| 2 | 4 | 3.4 | 4.4 | 5.6 |
| 3 | 4 | 3.6 | 6.0 | 12.6 |
| 4 | 6 | 3.2 | 4.3 | 4.8 |
| 5 | 6 | 3.4 | 5.2 | 7.3 |
| 6 | 6 | 3.6 | 13.3 | 64.0 |
| 7 | 8 | 3.2 | 4.5 | 4.8 |
| 8 | 8 | 3.4 | 6.0 | 8.5 |
| 9 | 8 | 3.6 | 35.1 | 168 |

### Example 14

Example 1 was repeated except that the effect of adding fiber to the composition was evaluated. The test combinations and results are shown in Table 17. Referring to Table 17, the results indicate that the fibers tested can be used but that polydextrose, inulin, and arabinogalactan are preferred. The other fibers should only be added to the composition in amounts less that about 0.1 wt%.

**Table 17**

| Type of Fiber | Usage Level | Comments |
|---|---|---|
| Pectin | 0.1 % | Some sediments |
| Cellulose gum | 0.1 % | Some sediments |
| Xanthan Gum | 0.1 % | Some sediments |
| Gum Arabic | 0.2% | Some sediments |
| Polydextrose | 0-4% | Clear, no sediments |
| Inulin | 0-4% | Clear, no sediments |
| Arabinogalactan | 0-4% | Clear, no sediments |

## Claims

1. A clear fruit-juice based beverage composition comprising:
(a) a source of protein in an amount from 2 to 8 wt% of the composition, wherein the protein source is whey protein isolate or a combination of whey protein isolate and whey protein hydrolysate, and wherein the whey protein hydrolysate comprises up to 20 wt % of the combination;
(b) a source of carbohydrate in an amount from 1 to 30 wt% of the composition;
(c) a source of edible acids in an amount from 0.01 to 3 wt% of the composition;
(d) a source of fruit juices in an amount from 5 to 40 wt% of the composition.

2. The composition of claim 1 wherein the composition has a pH of 4.0 or less, and has a viscosity of less than 40 centipoises.

3. The composition of claim 2 wherein the composition has a viscosity of less than 20 centipoises.

4. The composition of any one of claims 1 to 3 wherein the source of fruit juices is in an amount from 10 to 40 wt%.

5. The composition of any one of claims 1 to 3 wherein the source of carbohydrate comprises from 5 to 25 wt% of the composition.

6. The composition of any one of claims 1 to 3 wherein the source of carbohydrate comprises from 8 to 20 wt% of the composition.

7. The composition of any one of claims 1 to 6 wherein the protein source is a combination of whey protein isolate and whey protein hydrolysate, and wherein whey protein hydrolysate comprises up to 20 wt% of the combination.

8. The composition of any one of claims 1 to 7 wherein the carbohydrate source comprises at least one carbohydrate selected from the group consisting of sucrose, fructose, HFCS 42, HFCS 55 and maltodextrin.

9. The composition of any one of claims 1 to 7 wherein the source of carbohydrate is a combination of maltodextrin and at least one other carbohydrate selected from the group consisting of sucrose, fructose, HFCS 42, and HFCS 55, and wherein maltodextrin comprises up to 25 wt% of the combination.

10. The composition of any one of claims 1 to 9 wherein the source of edible acids comprises at least one edible acid selected from the group consisting of citric acid, phosphoric acid, and malic acid.

11. The composition of any one of claims 1 to 9 wherein the source of edible acids comprises a combination of malic acid and at least one other edible acid selected from the group consisting of citric acid and phosphoric acid, and wherein malic acid comprises up to 30 wt% of the combination.

12. The composition of any one of claims 1 to 11 further comprising from one-tenth to three times the recommended daily allowance of one or more minerals.

13. The composition of any one of claims 1 to 11 further comprising at least one mineral selected from the group consisting of calcium, potassium, magnesium, iron, sodium, iodine, molybdenum, chromium, selenium, zinc, and copper.

14. The composition of any one of claims 1 to 13 further comprising at least one water-soluble vitamin.

15. The composition of any one of claims 1 to 13 further comprising at least one vitamin selected from the group consisting of vitamin A, vitamin B1, vitamin B2, vitamin B6, vitamin B12, vitamin C, vitamin D, vitamin E, panthotenic acid, biotin, folic acid, and niacin.

16. The composition of any one of claims 1 to 15 further comprising up to 5 wt% of the composition of at least one fiber selected from the group consisting of pectin, cellulose gum, xanthan gum, gum Arabic, polydextrose, inulin, and arabinogalactan.

17. The composition of any one of claims 1 to 15 further comprising up to 5 wt% of the composition of at least one fiber selected from the group consisting of polydextrose, inulin, and arabinogalactan.

18. The composition of any one of claims 1 to 15 further comprising from 0.5 wt% to 4% of the composition of at least one fiber selected from the group consisting of polydextrose, inulin, and arabinogalactan.

19. The composition of any one of claims 1 to 18 further comprising up to 0.1 wt% of the composition of at least one fiber selected from the group consisting of pectin, cellulose gum, xanthan gum, and gum Arabic.

20. The composition of any one of claims 1 to 19 wherein the protein source is whey protein isolate.

21. The composition of any one of claims 1 to 20 wherein the carbohydrate source is a combination of sucrose and fructose.

## Patentansprüche

1. Klare Getränkezusammensetzung auf Fruchtsaftbasis, aufweisend:
(a) eine Proteinquelle in einer Menge von 2 bis 8 Gew.-% der Zusammensetzung, wobei die Proteinquelle Milchserumproteinisolat oder eine Kombination von Milchserumproteinisolat und Milchserumproteinhydrolysat ist, und wobei das Milchserumproteinhydrolysat bis zu 20 Gew.-% der Kombination ausmacht;
(b) eine Kohlenhydratquelle in einer Menge von 1 bis 30 Gew.-% der Zusammensetzung;
(c) eine Speisesäurenquelle in einer Menge von 0,01 bis 3 Gew.-% der Zusammensetzung;
(d) eine Fruchtsaftquelle in einer Menge von 5 bis 40 Gew.-% der Zusammensetzung.

2. Zusammensetzung nach Anspruch 1, wobei die Zusammensetzung einen pH von 4,0 oder weniger und eine Viskosität von weniger als 40 Centipoise hat.

3. Zusammensetzung nach Anspruch 2, wobei die Zusammensetzung eine Viskosität von weniger als 20 Centipoise hat.

4. Zusammensetzung nach irgendeinem der Ansprüche 1 bis 3, wobei die Fruchtsaftquelle in einer Menge von 10 bis 40 Gew.-% vorliegt.

5. Zusammensetzung nach irgendeinem der Ansprüche 1 bis 3, wobei die Kohlenhydratquelle 5 bis 25 Gew.-% der Zusammensetzung ausmacht.

6. Zusammensetzung nach irgendeinem der Ansprüche 1 bis 3, wobei die Kohlenhydratquelle 8 bis 20 Gew.-% der Zusammensetzung ausmacht.

7. Zusammensetzung nach irgendeinem der Ansprüche 1 bis 6, wobei die Proteinquelle eine Kombination von Milchserumproteinisolat und Milchserumproteinhydrolysat ist, und wobei das Milchserumproteinhydrolysat bis zu 20 Gew.- % der Kombination ausmacht.

8. Zusammensetzung nach irgendeinem der Ansprüche 1 bis 7, wobei die Kohlenhydratquelle zumindest ein Kohlenhydrat aufweist, das aus der Gruppe ausgewählt wird, die aus Saccharose, Fructose, HFCS 42, HFCS 55 und Maltodextrin besteht.

9. Zusammensetzung nach irgendeinem der Ansprüche 1 bis 7, wobei die Kohlenhydratquelle eine Kombination von Maltodextrin und zumindest einem weiteren Kohlenhydrat ist, das aus der Gruppe ausgewählt wird, die aus Saccharose, Fructose, HFCS 42, HFCS 55 besteht, und wobei Maltodextrin bis zu 25 Gew.-% der Kombination ausmacht.

10. Zusammensetzung nach irgendeinem der Ansprüche 1 bis 9, wobei die Speisesäurenquelle zumindest eine Speisesäure aufweist, die aus der Gruppe ausgewählt wird, die aus Zitronensäure, Phosphorsäure und Apfelsäure besteht.

11. Zusammensetzung nach irgendeinem der Ansprüche 1 bis 9, wobei die Speisesäurenquelle eine Kombination von Apfelsäure und zumindest einer weiteren Speisesäure aufweist, die aus der Gruppe ausgewählt wird, die aus Zitronensäure und Phosphorsäure besteht, und wobei Apfelsäure bis zu 30 Gew.-% der Kombination ausmacht.

12. Zusammensetzung nach irgendeinem der Ansprüche 1 bis 10, die ferner von einem Zehntel bis zu dem Dreifachen der empfohlenen Tagesdosis von einem oder mehreren Mineralien aufweist.

13. Zusammensetzung nach irgendeinem der Ansprüche 1 bis 11, die ferner zumindest ein Mineral aufweist, das aus der Gruppe ausgewählt ist, die aus Kalzium, Kalium, Magnesium, Eisen, Natrium, Jod, Molybdän, Chrom, Selen, Zink und Kupfer besteht.

14. Zusammensetzung nach irgendeinem der Ansprüche 1 bis 13, die ferner zumindest ein wasserlösliches Vitamin aufweist.

15. Zusammensetzung nach irgendeinem der Ansprüche 1 bis 13, die ferner zumindest ein Vitamin aufweist, das aus der Gruppe ausgewählt wird, die aus Vitamin A, Vitamin B1, Vitamin B2, Vitamin B6, Vitamin B12, Vitamin C, Vitamin D, Vitamin E, Pantothensäure, Biotin, Folsäure und Niacin besteht.

16. Zusammensetzung nach irgendeinem der Ansprüche 1 bis 15, die ferner zumindest einem Ballaststoff mit bis zu 5 Gew.-% der Zusammensetzung aufweist, der aus der Gruppe ausgewählt wird, die aus Pektin, Zellulosegummi, Xanthangummi, Gummi Arabikum, Polydextrose, Inulin und Arabinogalaktan besteht.

17. Zusammensetzung nach irgendeinem der Ansprüche 1 bis 15, die ferner zumindest einen Ballaststoff mit bis zu 5 Gew.-% der Zusammensetzung aufweist, der aus der Gruppe ausgewählt wird, die aus Polydextrose, Inulin und Arabinogalaktan besteht.

18. Zusammensetzung nach irgendeinem der Ansprüche 1 bis 15, die ferner zumindest einen Ballaststoff von 0,5 bis 4 Gew.-% der Zusammensetzung aufweist, der aus der Gruppe ausgewählt wird, die aus Polydextrose, Inulin und Arabinogalaktan besteht.

19. Zusammensetzung nach irgendeinem der Ansprüche 1 bis 18, die ferner zumindest einen Ballaststoff mit bis zu 0,1 Gew.-% der Zusammensetzung aufweist, der aus der Gruppe ausgewählt wird, die aus Pektin, Zellulosegummi, Xanthangummi und Gummi Arabikum besteht.

20. Zusammensetzung nach irgendeinem der Ansprüche 1 bis 19, wobei die Proteinquelle Milchserumproteinisolat ist.

21. Zusammensetzung nach irgendeinem der Ansprüche 1 bis 20, wobei die Kohlenhydratquelle eine Kombination von Saccharose und Fructose ist.

## Revendications

1. Composition de boisson à base de jus de fruits clair comprenant :
(a) une source de protéines dans une quantité entre 2 et 8 % en poids de la composition, la source de protéines étant un isolat de protéine lactosérique ou une combinaison d'isolat de protéine lactosérique et d'hydrolysat de protéine lactosérique, et l'hydrolysat de protéine lactosérique comprenant jusqu'à 20 % en poids de la combinaison ;
(b) une source de glucides dans une quantité entre 1 et 30 % en poids de la composition ;
(c) une source d'acides comestibles dans une quantité entre 0,01 et 3 % en poids de la composition ;
(d) une source de jus de fruits dans une quantité entre 5 et 40 % en poids de la composition.

2. Composition selon la revendication 1, la composition ayant un pH de 4,0 ou moins, et ayant une viscosité de moins de 40 centipoises.

3. Composition selon la revendication 2, la composition ayant une viscosité de moins de 20 centipoises.

4. Composition selon l'une des revendications 1 à 3, la source de jus de fruits étant présente dans une quantité entre 10 et 40 % en poids.

5. Composition selon l'une des revendications 1 à 3, la source de glucides étant comprise entre 5 et 25 % en poids de la composition.

6. Composition selon l'une des revendications 1 à 3, la source de glucides étant comprise entre 8 et 20 % en poids de la composition.

7. Composition selon l'une des revendications 1 à 6, la source de protéines étant une combinaison d'isolat de protéine lactosérique et d'hydrolysat de protéine lactosérique, et l'hydrolysat de protéine lactosérique comprenant jusqu'à 20 % en poids de la combinaison.

8. Composition selon l'une des revendications 1 à 7, la source de glucides comprenant au moins un glucide sélectionné parmi le groupe constitué de saccharose, fructose, HFCS 42, HFCS 55 et maltodextrine.

9. Composition selon l'une des revendications 1 à 7, la source de glucides étant une combinaison de maltodextrine et d'au moins un autre glucide sélectionné parmi le groupe constitué de saccharose, fructose, HFCS 42, et HFCS 55, et la maltodextrine comprenant jusqu'à 25 % en poids de la combinaison.

10. Composition selon l'une des revendications 1 à 9, la source d'acides comestibles comprenant au moins un acide comestible sélectionné parmi le groupe constitué d'acide citrique, d'acide phosphorique, et d'acide malique.

11. Composition selon l'une des revendications 1 à 9, la source d'acides comestibles comprenant une combinaison d'acide malique et d'au moins un autre acide comestible sélectionné parmi le groupe constitué d'acide citrique et d'acide phosphorique, et l'acide malique comprenant jusqu'à 30 % en poids de la combinaison.

12. Composition selon l'une des revendications 1 à 11, comprenant en outre de un dixième à trois fois la dose journalière recommandée d'un ou plusieurs minéraux.

13. Composition selon l'une des revendications 1 à 11, comprenant en outre au moins un minéral sélectionné parmi le groupe constitué de calcium, potassium, magnésium, fer, sodium, iode, molybdène, chrome, sélénium, zinc, et cuivre.

14. Composition selon l'une des revendications 1 à 13, comprenant en outre au moins une vitamine soluble dans l'eau.

15. Composition selon l'une des revendications 1 à 13, comprenant en outre au moins une vitamine sélectionné parmi le groupe constitué de vitamine A, vitamine B1, vitamine B2, vitamine B6, vitamine B12, vitamine C, vitamine D, vitamine E, acide pantothénique, biotine, acide folique, et niacine.

16. Composition selon l'une des revendications 1 à 15, comprenant en outre jusqu'à 5 % en poids de la composition d'au moins une fibre sélectionnée parmi le groupe constitué de pectine, carboxyméthylcellulose, gomme de xanthane, gomme arabique, polydextrose, inuline, et arabinogalactane.

17. Composition selon l'une des revendications 1 à 15, comprenant en outre jusqu'à 5 % en poids de la composition d'au moins une fibre sélectionnée parmi le groupe constitué de polydextrose, inuline, et arabinogalactane.

18. Composition selon l'une des revendications 1 à 15, comprenant en outre de 0,5 % en poids à 4 % de la composition d'au moins une fibre sélectionnée parmi le groupe constitué de polydextrose, inuline, et arabinogalactane.

19. Composition selon l'une des revendications 1 à 18, comprenant en outre jusqu'à 0,1 % en poids de la composition d'au moins une fibre sélectionnée parmi le groupe constitué de pectine, carboxyméthylcellulose, gomme de xanthane, et gomme arabique.

20. Composition selon l'une des revendications 1 à 19, la source de protéines étant un isolat de protéine lactosérique.

21. Composition selon l'une des revendications 1 à 20, la source de glucides étant une combinaison de saccharose et fructose.
